# EUROPEAN PATENT SPECIFICATION

(11) **EP 2 787 427 B1**
(45) Date of publication and mention of the grant of the patent: **18.03.2020**
(21) Application number: 13382127.2
(22) Date of filing: 05.04.2013
(51) Int. Cl.: G06F 3/0488, G06F 3/0482, B60K 37/06, B60K 35/00

(54) **Process for the representation and/or handling of information in a car**
Verfahren zur Darstellung und/oder Handhabung von Informationen in einem Auto
Procédé pour la représentation et/ou manipulation d'informations dans une voiture

(43) Date of publication of application: 08.10.2014
(73) Proprietor: Seat, S.A., 08760 Martorell (ES)
(72) Inventor: Baños, Victor, 08860 Castelldefels (ES); Bayona, Teresa, 08700 Igualada (ES)
(74) Representative: Elzaburu S.L.P.

(56) References cited:
- EP-A1- 2 045 700
- JP-A- 2003 195 998
- US-A- 5 305 435
- US-A- 5 917 492
- US-A1- 2006 184 894

## Description

### PURPOSE OF THE INVENTION

The purpose of this patent application is to register a method for the representation and/or handling of information on a car screen that incorporates significant innovations and advantages.

More specifically, this invention refers to a method of representing information in a way that allows the vehicle user to interact and use the information via a touch system with tabs that display and retract data in response to pressing or dragging an end section or a strip. These tabs can be displayed so they overlap and retract simultaneously and in batch mode, and also displaying the number of tabs retracted in batch mode.

The purpose of the invention is to improve user interaction with the vehicle interface and make it easier to use the information available.

### BACKGROUND OF THE INVENTION

The car screen is used as a device for displaying the information present and/or received within the vehicle, so that the user can activate different options by means of a controlling device for choosing a function, making adjustments, or changing to a different type of information on the menu. If the screen is a touch screen, it can form part of the controlling device and this allows interaction with the different options available.

The car screen is normally located in the dashboard or central console, and therefore available to both the driver and the passenger, so that it can be handled by any of the two. In particular with touch screens the user can handle information through contact with his or her finger, browsing the options available and activating one or another at will. This method of presenting and handling information on a car screen is usually employed for navigation systems, multimedia, telematics, and/or for adjusting driver assistance variables.

It must be noted that the presence of this type of interface in the vehicle, whether it uses touch screen technology or not, may reduce the quality of driving. Therefore the representation and handling of information must facilitate operation as much as possible, minimising any difficulties and by extension any loss of concentration regarding the road conditions. Thus, the information must be presented so that the driver can view, understand and handle it as quickly as possible. The information must be accessible and designed for intuitive operation, so it can be handled in the shortest possible period of time. Furthermore, it must consider the increase in the number of electronic devices available for users. Modern vehicles already feature a multifunctional presentation device and control for browsing, a range of driver assistance systems, communication and multimedia devices, including a mobile phone interface, music and language reproduction systems, etc., and all of these systems contain information to be handled by the driver while he or she is focusing on the task of driving.

There are currently a range of solutions for the representation and/or handling of information on a car screen. In the state-of-the-art document US2010/0039400 a method and device for controlling information movement on a touch screen is described. This includes the method for displaying movement information using the touch screen control region, contact detection for a moving pointer, and a dragging operation from the current pointer location in response to being touched. Additionally, in the state-of-the-art document DE102009036371, a method for viewing a screen object in a region is described, moving this object to another region by using a device. An anchoring object is displayed for the screen object that remains in the initial region. The screen object moves backwards when the anchoring object is activated, and the previous viewing region is displayed. Furthermore, the state-of-the-art document DE102010048745 describes a method for selecting several user interface objects presented graphically in the display unit, after detecting the beginning of movement by the first two objects. It displays a touch control feature on the edge of the screen unit that can be activated by the operator.

Document EP 2045700 A1 is also known in the state of the art. This document discloses a mobile terminal comprising a display module to display a tag and to display a menu screen image related to the tag at one portion of a background image as the tag is dragged, the menu screen image being displayed according to a dragging direction and a dragging distance.

In addition, document JP 2003195998 A discloses a method for the representation and/or handling of information on a graphical representation device, e.g. of a car, according to the preamble of appended claim 1.

Furthermore, document US 5917492 A is also known. This document discloses a method and system for displaying a graphical representation on a display screen of a data processing system in a manner that optimizes screen "real estate" and ease of information viewing. The graphical representation may be a tree hierarchy including a plurality of expandable and collapsible nodes.

Document US 5305435 A is also known from the prior art. This document discloses a novel computer display interface which simulates familiar document handling activities based upon a unique display metaphor representative of a standard office filing system and work area of a desk. The display system includes multi-windows which are displayed in a central screen area designated for just active computer windows.

Finally, prior art document US 2006/184894 A1 is known. This document discloses a mechanism for maintaining some global windowing context to parent/child relationships. When a current window spawns a child window, a data structure stores the parent/child relationship within the window hierarchy.

Consequently, there remains a need to develop a way of displaying information in the vehicle interface, so the user can handle it simply and intuitively, and in the present invention, this is done by using a touch system with tabs that display and retracts data in response to pressing or dragging an end section or a strip. These tabs can be displayed so they overlap and retract simultaneously and in batch mode, depending on the user's touch, thus increasing access to information. Similarly, the number of tabs retracted in batch mode is displayed, allowing the user to have advance knowledge at a glance of the information that will appear on the interface if he or she touches the tab.

### DESCRIPTION OF THE INVENTION

The purpose of this invention is to create a method for presenting and handling information on a car screen so that the driver can interact simply and intuitively with the information presented on the vehicle interface. The corresponding device is also an object of this invention.

The solution to the purpose of this invention can be obtained through a method with the features of claim 1 and through a device with the features of claim 7.

Therefore the purpose of this invention is to design a vehicle information representation and handling method. More specifically, this involves the use of tabs that display and gather data from and towards the sides of the vehicle's touch screen, thus becoming a user interface. These tabs, whose surface in display mode usually takes up the maximum space available in the screen, have on their end sections some strips or fringes that the user can actuate preferably with a tactile action of pressing. After this action, the tabs are displayed and/or retracted, batching tabs above a fixed number, and giving the driver increased access to the information available in the vehicle.

Initially the graphical representation device displays a main screen with the most important information for the user, with two folded tabs located to the side, plus an upper tab. The tabs also contain highly important information in this context (radio, telephone, media, GPS, etc.), although of lower priority than that displayed on the first screen. The user can display any tab at any time in this context, which by default remains fixed until removed.

Thus, the present invention represents an alternative to the traditional hierarchical menus and submenus of a prefixed structure. It initially displays general information that guides the user towards the tabs where he or she will find the desired detailed information. Once this has been accessed, the user can access all the information available in the personalised tabs for this specific context. This provides greater flexibility in terms of information input and output, grouping data in an order corresponding to the preferences displayed by the user at all times when browsing by information context (radio, telephone, media, GPS, etc.)

In this way, this invention obtains the advantages and solves the problems mentioned above, while also adding further advantages that will become evident from the following detailed description.

Thus, the method for the representation and/or handling of information on a car screen of this invention will include the following phases:
- at least one on-demand strip is represented by a graphical representation device and located on the first side of the aforementioned graphical representation device,
- by means of an input device said at least one strip is activated,
- by means of a controlling device graphical data are generated in said graphical representation device, which then displays a tab, that displays and gather data, in the strip after activation, covering the contents of the graphical representation device from the first side of the device and showing all the information contained in the strip, but without the strip hiding the other side of the graphical representation device. This means that information can be displayed in an organised fashion depending on which side the tab comes from, by establishing criteria between the side and the contents of the information on display. The user can become familiar with the information device, allowing faster and more intuitive handling. Equally, by adapting in size to fit the graphical representation device frame, particularly a screen, the tab exploits the whole surface available to display information. However, the preferred surface area is limited by the presence of a fringe or strip located on one end section, next to the input device, specifically a touch screen. The screen profile does not hide the fringe/strip. This maximises the information representation surface area and retains the option of touch-screen operation for the preferred surface area fringe or tab strip.

The method for the representation and/or handling of information on a car screen of this invention also includes the phase where graphical data is generated by the graphical representation control device when the strip is activated using the input device. This continues until the tab content is hidden in the first side, and only the strip is on display. Consequently, the information display area of the graphical representation device (a screen) is fully available for displaying another tab coming from a different side of the screen frame. Therefore, when the information tab is retracted and/or hidden, or deactivated, there is still a small surface strip available so the user can activate and/or display the tab. The user has easy and instant access to the information available using a minimal surface area, which is deducted from the area that can be used either for the initial screen, or for area that can be taken up by other tabs coming from the other sides of the screen profile.

Advantageously, the width of the tabs is either smaller or the same as the width of the side of the graphical representation device, or the screen it is located in. This means that when the tab is displayed, whether from the left, right, upper or lower side, it can occupy the maximum information surface display area for the driver. However, there is also the option of reducing the width slightly in relation to the screen frame size with an aim to leaving a visible fringe so retracted tab strips can still be seen, even if another tab is on display from a different side.

According to another phase of the method of this invention, the graphical representation device represents a second strip that overlaps the first tab on display from the same side of the graphical representation device. The width of this strip is smaller or the same size as the tab it overlaps, therefore suggesting an organisational hierarchy among the contents of the successive tabs displayed on the same side, because those subsequently displayed never occupy a larger area than the previously displayed tab. More specifically, when activated using the input device, the second strip, which overlaps the first, displays a second tab following the second overlapping strip that covers the contents of the first strip it overlaps, until displaying all the information contained in the second tab but without overlapping the strip of the first tab. This means that the input device action strip, tactile property of the screen, of the lower tab, which has been displayed in advance, still remains accessible to the user, as well as the latest tab on display. This staggered tab representation mode allows all strips from the displayed tabs to be deployed, and the user can decide if he or she wants to retract only the upper tab and leave the lower tabs displayed on screen.

In a preferred implementation of the method of this invention, during the phase when a tab folds towards the side of the graphical representation device where the corresponding strip was available before activation, and having activated this strip using the input device, or tactile property of the screen, until the strip content and overlapping tabs are hidden, only the aforementioned strip remains represented in the graphical representation device. In this way, by touching the lower tab strip the user can more easily record all the information accessed by visiting successive tabs, as long as they are from the same side. This will be the case when interpreting that the user has obtained the required data, or has activated the desired operation. By touching the lowest strip tab, it will be understood that the user no longer requires anything from the information block or context displayed in successive levels from this side of the graphical representation device.

According to another phase of the method of this invention method, when a strip located in a second side of the graphical representation device, or screen, is activated by using an input device, a tab is displayed following the strip covering at least one activated strip on the first side. In this way, the method includes an option allowing the tabs to come from different sides of the screen, and information can be grouped thematically in a start menu, linked to the sides the information has come from. The fact that the user has several tabs accessible at all times, regardless of the information being browsed at a given moment, affords greater flexibility in terms of handling the information available in the start menu. It is worth emphasising that the latest information displayed will be positioned in a higher level, overlapping the information represented and/or displayed previously.

In a preferred implementation of the method of this invention, the tab of a strip not on display shows the number of tabs retracted simultaneously on the same side of the graphical representation device. In this way, the method offers the user a preview of the information that will be displayed, in batched form, if the user touches the strip showing this information. Thus, before displaying information, the method guides the user through the information in question prior to displaying the tab. As a result, the method saves the most recent levels of information shown in the program memory, and allows the user to return to recently displayed information without needing to browse and/or repeat the search through the whole information menu.

As detailed above, the aforementioned input device has a touch screen, which simplifies the user interface by eliminating the need for additional command devices such as a button panel, levers, rotary commander, etc.

According to another aspect of the invention, the activation may comprise a pressing action on a strip and/or dragging a strip and/or tab. In this way, the use of the vehicle interface is assimilated to other touch-screen multimedia devices the user may be familiar with. The pressing action for displaying or retracting the corresponding tab is only effective when touching a tab strip. The dragging action is effective whether touching the strip or the rest of the tab surface area, as long as the information displayed in the tab is not information that is likely to move, such as a map.

This invention also includes a device for the representation and/or handling of information on a graphical representation device of a car, comprising an input device, wherein the input device is a touch screen, the graphical representation device, and a controlling device configured to generate graphical data in the graphical representation device, so that at least one strip that can be activated is represented and located on the first side of the graphical representation device.
- By means of the input device, at least one strip is activated.
- By means of the control device graphical data are generated. This means that a tab, that displays and gather data, is displayed after the strip in response to activation, covering the content of the graphical representation device from the first side of the graphical representation device until it displays all the information contained in the tab without the strip reaching the other side of the device.

More specifically, during an additional phase of the method implemented in a device for the representation and/or handling of information on a car screen, the control device generates graphical data in the graphical representation device when the strip is activated using the input device, until the tab content is hidden on the first side and only the strip is displayed.

The advantages offered by the device of this invention are the same as those mentioned above for the method implemented in it.

By means of non-limiting example, the attached drawings show a structure designed in accordance with the invention of a method and device for the representation and/or handling of information on a car screen. Additional features and advantages of the procedure and/or device will become clear from the description of a preferred but not exclusive embodiment of the invention, which is illustrated by way of non-limiting example in the attached drawings, in which:

### BRIEF DESCRIPTION OF THE DRAWINGS

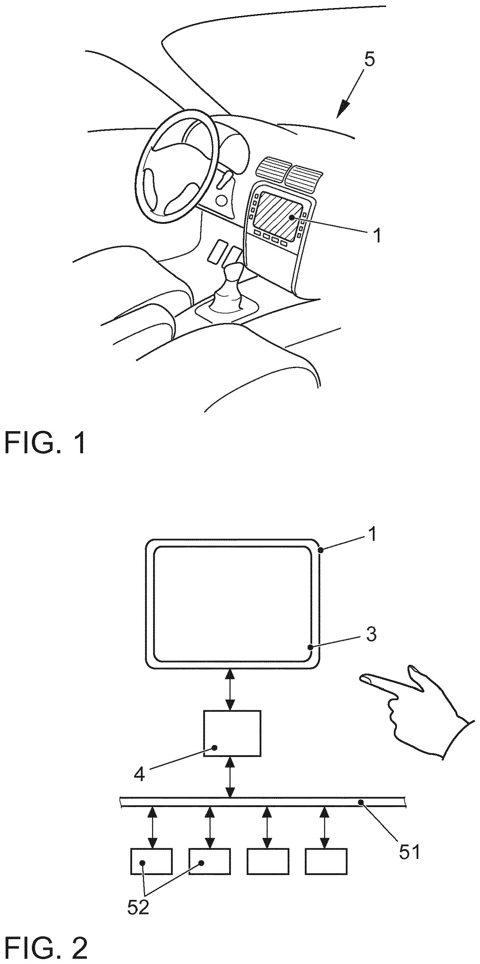

Figure 1.- A general front view, from the vehicle interface perspective with the user in the dashboard, in accordance with this invention;
Figure 2.- A diagram representation of the elements and systems involved in the development of this invention;

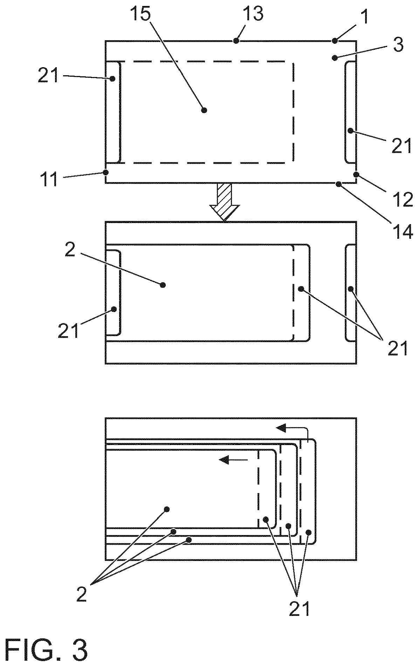

Figure 3.- A front view of a representation of how the tabs are displayed, and how they accumulate on the screen, in accordance with this invention;

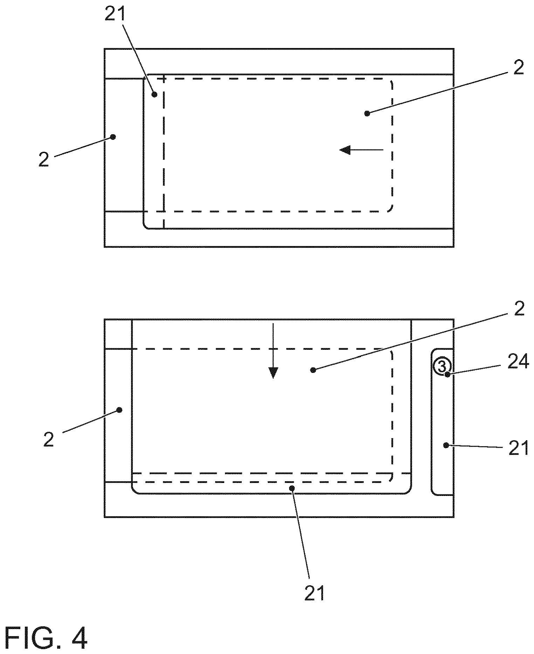

Figure 4.- A front view of a representation of how the tabs overlap, and are displayed from different sides of the screen, in accordance with this invention;

### DESCRIPTION OF A PREFERRED EMBODIMENT

In light of the aforementioned figures, and according to the numbering adopted, an example of preferred embodiment of the invention can be seen, comprising the parts and elements that are indicated and described below.

Thus, as can been seen in the figures, the method for the representation and/or handling of information on a car screen usually comprises the following phases:
- at least one strip (21) that can be activated is represented by means of a graphical representation device (1) and located on a first side (11) of this graphical representation device (1),
- at least one strip (21) is activated by means of an input device (3)
- a control device (4) is used to generate graphical data in the graphical representation device (1), so that a tab (2), that displays and gather data, is displayed after the strip (21) in response to activation. This covers the contents of the graphical representation device (1) from the first side (11) of the graphical representation device (1), displaying the information contained in the tab (2) without the strip (21) being hidden by the other side (12) of the graphical representation device (1).

More specifically, the method involves the phase where graphical data are generated in the graphical representation device (1) using the control device (4) when the strip (21) is activated through the input device (3), until the tab content (2) is hidden on the first side (11) and only the strip (21) is represented. For accurate implementation, a word and/or drawing can be included in the strip surface (21), when the tab (2) is deactivated, which indicates the information to be shown in the tab (2) when displayed.

It should be noted that, in a particular embodiment of this invention, each tab (2) is dedicated to specific information, and this is repeated in each main context:
- Tab to the left of the screen: Interaction with elements referring to the main screen or those that interact with it.
- Tab to the right of the screen: A reference tab (2) displayed in list form.
- Upper tab: A context adjustments tab (2). It does not contain levels, and only has displayable information. This feature is the result of its vertical orientation, which improves handling and usability.

This pattern applies to all information contexts between the vehicle interface and the user. The user, regardless of the position of the tab (2), therefore knows roughly what the tab (2) on each side does, increasing the intuitive nature of the system.

In addition, the width of the tab (2) is either smaller or the same as the width of the side of the graphical representation device (1) it is displayed in.

More specifically, the graphical representation device (1) acts as a second strip (21) overlapping the first tab (2) displayed from the same side of the graphical representation device (1). The width of the strip (21) is smaller or equal to the width of the tab (2) it overlaps.

When activated using the input device (3), this second strip (21) overlaps the first tab (2). A second tab is then displayed after the second overlapping strip (21), covering the contents of the first tab (2) it overlaps. This shows all the information contained in the second tab (2), without overlapping the strip (21) from the first tab (2).

When a tab (2) folds towards the side of the graphical representation device (1) that contained the corresponding strip (21) before activation, after activating the strip (21) using the input device (3) until the contents of the tab (2) and the overlapping tabs (2) are hidden, only this strip (21) remains on display in the graphical representation device (1).

Additionally, the tab (2) can overlap in any state and can overlap any tab (2) opened previously. The last tab (2) the user has selected will be visible. The tabs (2) can be accumulated in levels. The user browser operation screen options will include an option to close a whole set of tabs (2) displayed by touching the lowest tab in the group, as long as they are from the same side (11, 12, 13, 14), or by pressing the final tab from the upper level.

When a strip (21) located in a second side of the graphical representation device (1) is activated using an input device (3), a tab (2) is displayed after the strip (21), covering at least one activated tab (2) located on an initial side.

More specifically, the strip (21) of a non-displayed tab (2) shows the amount of tabs (2) that have been simultaneously batched on the same side of the graphical representation device (1). Thus, in a particular embodiment, each strip (2) in display form can show, via an icon (24), its level or order in relation to the previously displayed tabs (2). The aforementioned number or icon (24) can be kept after retracting the tabs, thus displaying the information regarding the number of tabs (2) that have been simultaneously withdrawn. If no icon (24) appears, this means that the tab (2) is from the first level. This icon (24) indicates the amount of tabs on display in batched mode. As well as a number, an icon or graphical symbol can indicate an amount, e.g. stacked disks, circular sectors framing a circle, or similar...

It should be noted that when a tab (2) is retracted, the information from the moment before the retraction is maintained. Thus, when the user displays the tab again, it will show the information in the state it was in before being retracted. This prevents the loss of the selected information in the tab (2) if the user, when performing a different action, closes the tab (2). The tab (2) can include an icon or specific surface area that if touched will reboot the initial content displayed by the tab (2).

It should be mentioned that the input device (3) is a touch screen and that activation involves pressing a strip (21) and/or dragging a strip (21) and/or tab (2).

As regards the device for the representation and/or handling of information on a car screen, it comprises an input device (3), a graphical representation device (1), particularly a touch screen, and a control device (4), configured so as to generate graphical data in the graphical representation device (1) in such a way that at least one strip (21) that can be activated is represented, located on a first side (11) of the graphical representation device (1).
- By means of at least one strip (21), said at least one input device (3) is activated,
- By means of the control device (4), graphical data are generated, so that a tab (2), that displays and gather data, is displayed after the strip (21) in response to activation, covering the contents of the graphical representation device (1) from the first side (11) of the graphical representation device (1), displaying the information contained in the tab (2) without the strip (21) being hidden by the other side (12) of the graphical representation device (1).

More specifically, the control device (4) generates graphical data in the graphical representation device (1) when the strip (21) is activated using the input device (3), until the tab (2) content is hidden in the first side (11) and only the strip (21) is represented. Furthermore, the graphical representation device (1) can be either the touch screen interface with the vehicle user, or, in an alternative embodiment, an external graphical representation device connected to the vehicle, such as, for example, a mobile phone or tablet touch screen.

In a particular embodiment, the device comprises the communication channel (51) and the other systems (52) present in the vehicle that the user interacts with through the vehicle's interface, whose method for the representation and/or handling of information corresponds to this invention.

### List of reference signs

- (1): Graphical representation device (vehicle interface screen)
- (11): Left side of the graphical representation device
- (12): Right side of the graphical representation device
- (13): Upper side of the graphical representation device
- (14): Underside of the graphical representation device
- (15): Centre of the graphical representation device
- (2): Tab (information display space)
- (21): Strip (fringe on the end section of the tab)
- (24): Icon
- (3): Input device (touch screen)
- (4): Controlling device (dashboard computer)
- (5): Vehicle
- (51): Internal communication channel of the vehicle
- (52): Other systems in the vehicle

## Claims

1. Method for the representation and/or handling of information on a graphical representation device (1) of a car, the method involving the representation of strips and tabs, wherein a tab is an information display space and a strip is a fringe on the end section of a tab, wherein the method comprises the steps of:
- representing a first strip (21) by means of the graphical representation device (1), wherein the first strip (21) is located on a first side (11) of said graphical representation device (1) and wherein the first strip (21) can be activated by a user by means of an input device (3), wherein said input device (3) is a touch screen,
- generating graphical data in said graphical representation device (1) by means of a control device (4), in response to an activation of said first strip (21), wherein generating graphical data comprises displaying a first tab (2), wherein the first tab (2) is displayed following the first strip (21) that has been activated, wherein the first tab (2) displays and gathers data, wherein the first tab (2) is displayed covering contents of said graphical representation device (1) from the first side (11) of the graphical representation device (1), displaying the information contained in the first tab (2) without the first strip (21) that has been activated reaching the opposite side (12) of said graphical representation device (1),
wherein the method is **characterized by** comprising the additional steps of:
- representing a second strip (21) by means of the graphical representation device (1), wherein the second strip (21) is located on the first side (11) of the graphical representation device (1), wherein the second strip (21) can be activated by a user by means of the input device (3),
wherein the second strip (21) is overlapping the first tab (2), the width of the second strip (21) being smaller or equal to the width of the first tab (2) it overlaps, wherein representing the second strip (21) comprises, in response to an activation of said second strip (21), displaying a second tab (2) following the second strip (21), wherein the second tab (2) covers the content of the first tab (2) it overlaps, until all the information contained in the second tab (2) is shown, but without overlapping the first strip (21) of the first tab (2);
wherein the method comprises an additional step of:
- detecting a further activation of the first strip (21) using the input device (3), and
- generating graphical data in the graphical representation device (1) by means of the control device (4), in response to the further activation of the first strip (21), wherein generating graphical data comprises retracting the first tab (2) and any overlapping tabs (2) that have been activated from the first side (11), wherein the retracting comprises hiding the first tab (2) and any overlapping tabs (2) that have been activated from the first side (11) on the first side (11), and only representing the first strip (21) in the graphical representation device (1).

2. The method according to claim 1, wherein, after displaying the first and second tab (2) in said graphical representation device (1), the method comprises the additional steps of:
- further activating the second strip (21) corresponding to said second tab (2), wherein further activating the second strip (21) corresponding to said second tab (2) is determined by the input device (3),
- generating graphical data in said graphical representation device (1) by means of the control device (4) in response to the further activation of said second strip (21), wherein generating graphical data comprises retracting the second tab (2), wherein retracting the second tab (2) comprises hiding the second tab (2) on the first side (11) and only representing the second strip (21) in the graphical representation device (1).

3. The method according to claim 1, wherein the width of the at least one first or second tab (2) is either smaller or the same as the width of the side of the graphical representation device (1) it is displayed on.

4. The method according to claim 1, wherein before retracting the first tab (2) and any overlapping tabs (2) that have been activated from the first side (11), the method comprises the steps of:
representing a further strip (21) by means of the graphical representation device (1), wherein the further strip (21) is located in a second side of the graphical representation device (1),
- detecting an activation of the further strip (21) using the input device (3), and
- displaying a further tab (2) following the further strip (21) in response to said activation of the further strip (21), wherein the further tab (2) covers at least one of the first and second activated tab (2) located on the first side (11).

5. The method according to claim 1, wherein after retracting the first tab (2) and the overlapping tabs (2) that have been activated from the first side (11), the step of representing the first strip (21) comprises:
- representing an icon (24) in the first strip (21), wherein the icon (24) indicates the amount of tabs (2) retracted simultaneously in the same side of the graphical representation device (1).

6. The method according to any of the preceding claims, wherein activation comprises a pressing action on a strip (21) and/ or an action of dragging a strip (21) and/or tab (2).

7. Device for the representation and/or handling of information on a graphical representation device (1) of a car, comprising an input device (3), wherein the input device (3) is a touch screen, the graphical representation device (1), and a control device (4), configured for running the method according to claim 1.

8. A device according to claim 7, wherein the control device (4) is further configured for, after displaying the second tab (2) in said graphical representation device (1), running the additional steps of:
- further activating the second strip (21) corresponding to said second tab (2), wherein further activating the second strip (21) corresponding to said second tab (2) is determined by the input device (3),
- generating graphical data in said graphical representation device (1) by means of the control device (4) in response to the further activation of said second strip (21), wherein generating graphical data comprises retracting the second tab (2), wherein retracting the second tab (2) comprises hiding the second tab (2) on the first side (11) and representing only the second strip (21) in the graphical representation device (1).

## Patentansprüche

1. Verfahren zur Darstellung und/oder Handhabung von Informationen auf einer grafischen Darstellungsvorrichtung (1) eines Autos, wobei das Verfahren die Darstellung von Streifen und Registerkarten umfasst, wobei eine Registerkarte ein Informationsanzeigebereich ist und ein Streifen ein Rand am Endabschnitt einer Registerkarte ist,
wobei das Verfahren die Schritte umfasst:
- Darstellen eines ersten Streifens (21) mittels der grafischen Darstellungsvorrichtung (1), wobei sich der erste Streifen (21) auf einer ersten Seite (11) der grafischen Darstellungsvorrichtung (1) befindet und wobei sich der erste Streifen (21) von einem Benutzer mittels einer Eingabevorrichtung (3) aktiviert werden kann, wobei die Eingabevorrichtung (3) ein Touchscreen ist,
- Erzeugen von Grafikdaten in der grafischen Darstellungsvorrichtung (1) mittels einer Steuervorrichtung (4) in Reaktion auf eine Aktivierung des ersten Streifens (21), wobei das Erzeugen von Grafikdaten das Anzeigen einer ersten Registerkarte (2) umfasst, wobei die erste Registerkarte (2) nach dem ersten Streifen (21) angezeigt wird, der aktiviert worden ist, wobei die erste Registerkarte (2) Daten anzeigt und sammelt, wobei die erste Registerkarte (2) angezeigt wird, indem sie den Inhalt der grafischen Darstellungsvorrichtung (1) von der ersten Seite (11) der grafischen Darstellungsvorrichtung (1) bedeckt und die in der ersten Registerkarte (2) enthaltenen Informationen anzeigt, ohne dass der erste Streifen (21), der aktiviert worden ist, die gegenüberliegende Seite (12) der grafischen Darstellungsvorrichtung (1) erreicht,
wobei das Verfahren **dadurch gekennzeichnet ist, dass** es die zusätzlichen Schritte umfasst:
- Darstellen eines zweiten Streifens (21) mittels der grafischen Darstellungsvorrichtung (1), wobei sich der zweite Streifen (21) auf der ersten Seite (11) der grafischen Darstellungsvorrichtung (1) befindet, wobei der zweite Streifen (21) von einem Benutzer mittels der Eingabevorrichtung (3) aktiviert werden kann,
wobei der zweite Streifen (21) die erste Registerkarte (2) überlappt, wobei die Breite des zweiten Streifens (21) kleiner oder gleich der Breite der ersten Registerkarte (2) ist, die er überlappt, wobei das Darstellen des zweiten Streifens (21), als Reaktion auf eine Aktivierung des zweiten Streifens (21), das Anzeigen einer zweiten Registerkarte (2) nach der zweiten Registerkarte (21) umfasst, wobei die zweite Registerkarte (2) den Inhalt der ersten Registerkarte (2) bedeckt, die sie überlappt, bis alle in der zweiten Registerkarte (2) enthaltenen Informationen angezeigt werden, ohne jedoch den ersten Streifen (21) der ersten Registerkarte (2) zu überlappen;
wobei das Verfahren einen zusätzlichen Schritt umfasst:
- Erfassen einer weiteren Aktivierung des ersten Streifens (21) unter Verwendung der Eingabevorrichtung (3) und
- Erzeugen von Grafikdaten in der grafischen Darstellungsvorrichtung (1) mittels der Steuervorrichtung (4) als Reaktion auf die weitere Aktivierung des ersten Streifens (21), wobei das Erzeugen von Grafikdaten das Zurückziehen der ersten Registerkarte (2) und aller überlappenden Registerkarten (2) umfasst, die von der ersten Seite (11) aktiviert worden sind,
wobei das Zurückziehen das Ausblenden der ersten Registerkarte (2) und aller überlappenden Registerkarten (2), die von der ersten Seite (11) auf der ersten Seite (11) aktiviert worden sind, und nur das Darstellen des ersten Streifens (21) in der grafischen Darstellungsvorrichtung (1) umfasst.

2. Verfahren nach Anspruch 1, wobei das Verfahren nach dem Anzeigen der ersten und zweiten Registerkarte (2) in der grafischen Darstellungsvorrichtung (1) die zusätzlichen Schritte umfasst:
- weiteres Aktivieren des zweiten Streifens (21), der der zweiten Registerkarte (2) entspricht, wobei weiteres Aktivieren des zweiten Streifens (21), der der zweiten Registerkarte (2) entspricht, durch die Eingabevorrichtung (3) bestimmt wird,
- Erzeugen von Grafikdaten in der grafischen Darstellungsvorrichtung (1) mittels der Steuervorrichtung (4) in Reaktion auf die weitere Aktivierung des zweiten Streifens (21),
wobei das Erzeugen von Grafikdaten das Zurückziehen der zweiten Registerkarte (2) umfasst, wobei das Zurückziehen der zweiten Registerkarte (2) das Ausblenden der zweiten Registerkarte (2) auf der ersten Seite (11) und nur das Darstellen des zweiten Streifens (21) in der grafischen Darstellungsvorrichtung (1) umfasst.

3. Verfahren nach Anspruch 1, wobei die Breite der mindestens einen ersten oder zweiten Registerkarte (2) entweder kleiner oder gleich der Breite der Seite der grafischen Darstellungsvorrichtung (1) ist, auf der sie angezeigt wird.

4. Verfahren nach Anspruch 1, wobei das Verfahren vor dem Zurückziehen der ersten Registerkarte (2) und aller überlappenden Registerkarten (2), die von der ersten Seite (11) aktiviert worden sind, die Schritte umfasst:
Darstellen eines weiteren Streifens (21) mittels der grafischen Darstellungsvorrichtung (1), wobei sich der weitere Streifen (21) in einer zweiten Seite der grafischen Darstellungsvorrichtung (1) befindet,
- Erfassen einer Aktivierung des weiteren Streifens (21) unter Verwendung der Eingabevorrichtung (3) und
- Anzeigen einer weiteren Registerkarte (2), die dem weiteren Streifen (21) folgt, als Reaktion auf die Aktivierung des weiteren Streifens (21), wobei die weitere Registerkarte (2) mindestens eine der ersten und zweiten aktivierten Registerkarten (2), die sich auf der ersten Seite (11) befinden, bedeckt.

5. Verfahren nach Anspruch 1, wobei nach dem Zurückziehen der ersten Registerkarte (2) und der überlappenden Registerkarten (2), die von der ersten Seite (11) aktiviert worden sind, der Schritt zum Darstellen des ersten Streifens (21) umfasst:
- Darstellen eines Symbols (24) in dem ersten Streifen (21), wobei das Symbol (24) die Anzahl der Registerkarten (2) anzeigt, die gleichzeitig auf derselben Seite der grafischen Darstellungsvorrichtung (1) zurückgezogen sind.

6. Verfahren nach einem der vorhergehenden Ansprüche, wobei die Aktivierung einen Druckvorgang auf einen Streifen (21) und/oder einen Vorgang zum Ziehen eines Streifens (21) und/oder einer Registerkarte (2) umfasst.

7. Vorrichtung zur Darstellung und/oder Handhabung von Informationen auf einer grafischen Darstellungsvorrichtung (1) eines Autos, umfassend eine Eingabevorrichtung (3), wobei die Eingabevorrichtung (3) ein Touchscreen ist, die grafische Darstellungsvorrichtung (1), und eine Steuervorrichtung (4), die zum Ausführen des Verfahrens nach Anspruch 1 ausgelegt sind.

8. Vorrichtung nach Anspruch 7, wobei die Steuervorrichtung (4) zudem ausgelegt ist, um nach dem Anzeigen der zweiten Registerkarte (2) in der grafischen Darstellungsvorrichtung (1) die zusätzlichen Schritte auszuführen:
- weiteres Aktivieren des zweiten Streifens (21), der der zweiten Registerkarte (2) entspricht, wobei weiteres Aktivieren des zweiten Streifens (21), der der zweiten Registerkarte (2) entspricht, durch die Eingabevorrichtung (3) bestimmt wird,
- Erzeugen von Grafikdaten in der grafischen Darstellungsvorrichtung (1) mittels der Steuervorrichtung (4) in Reaktion auf die weitere Aktivierung des zweiten Streifens (21),
wobei das Erzeugen von Grafikdaten das Zurückziehen der zweiten Registerkarte (2) umfasst, wobei das Zurückziehen der zweiten Registerkarte (2) das Ausblenden der zweiten Registerkarte (2) auf der ersten Seite (11) und nur das Darstellen des zweiten Streifens (21) in der grafischen Darstellungsvorrichtung (1) umfasst.

## Revendications

1. Procédé pour la représentation et/ou manipulation d'informations sur un dispositif (1) de représentation graphique d'une voiture, le procédé impliquant la représentation de bandes et d'onglets, dans lequel un onglet est un espace d'affichage d'informations et une bande est une frange sur la section d'extrémité d'un onglet,
dans lequel le procédé comprend les étapes de :
- représenter une première bande (21) au moyen du dispositif (1) de représentation graphique, dans lequel la première bande (21) est située sur un premier côté (11) dudit dispositif (1) de représentation graphique et dans lequel la première bande (21) peut être activée par un utilisateur au moyen d'un dispositif d'entrée (3), dans lequel ledit dispositif d'entrée (3) est un écran tactile,
- générer des données graphiques dans ledit dispositif (1) de représentation graphique au moyen d'un dispositif de commande (4), en réponse à une activation de ladite première bande (21), dans lequel la génération de données graphiques comprend l'affichage d'un premier onglet (2), dans lequel le premier onglet (2) est affiché après la première bande (21) ayant été activée, dans lequel le premier onglet (2) affiche et recueille des données, dans lequel le premier onglet (2) est affiché en recouvrant des contenus dudit dispositif (1) de représentation graphique à partir du premier côté (11) du dispositif (1) de représentation graphique, en affichant les informations contenues dans le premier onglet (2) sans la première bande (21) ayant été activée en atteignant le côté opposé (12) dudit dispositif (1) de représentation graphique,
dans lequel le procédé est **caractérisé en ce qu'**il comprend les étapes supplémentaires de :
- représenter une seconde bande (21) au moyen du dispositif (1) de représentation graphique, dans lequel la seconde bande (21) est située sur le premier côté (11) du dispositif (1) de représentation graphique, dans lequel la seconde bande (21) peut être activée par un utilisateur au moyen du dispositif d'entrée (3),
dans lequel la seconde bande (21) se superpose au premier onglet (2), la largeur de la seconde bande (21) étant inférieure ou égale à la largeur du premier onglet (2) qu'elle superpose, dans lequel la représentation de la seconde bande (21) comprend, en réponse à une activation de ladite seconde bande (21), l'affichage d'un second onglet (2) après la seconde bande (21), dans lequel le second onglet (2) recouvre le contenu du premier onglet (2) qu'il superpose, jusqu'à ce que toutes les informations contenues dans le second onglet (2) soient indiquées, mais sans superposer la première bande (21) du premier onglet (2) ;
dans lequel le procédé comprend une étape supplémentaire de :
- détecter une activation supplémentaire de la première bande (21) en utilisant le dispositif d'entrée (3), et
- générer des données graphiques dans le dispositif (1) de représentation graphique au moyen du dispositif de commande (4), en réponse à l'activation supplémentaire de la première bande (21), dans lequel la génération des données graphiques comprend le retrait du premier onglet (2) et de tout onglet (2) se superposant ayant été activé à partir du premier côté (11),
dans lequel le retrait comprend la dissimulation du premier onglet (2) et de tout onglet (2) se superposant ayant été activé à partir du premier côté (11) sur le premier côté (11), et représenter uniquement la première bande (21) dans le dispositif (1) de représentation graphique.

2. Procédé selon la revendication 1, dans lequel, après affichage du premier et du second onglet (2) dans le dispositif (1) de représentation graphique, le procédé comprend les étapes supplémentaires de :
- activer de façon supplémentaire la seconde bande (21) correspondant au dit second onglet (2), dans lequel l'activation supplémentaire de la seconde bande (21) correspondant au dit second onglet (2) est déterminée par le dispositif d'entrée (3),
- générer des données graphiques dans ledit dispositif (1) de représentation graphique au moyen du dispositif de commande (4) en réponse à l'activation supplémentaire de ladite seconde bande (21),
dans lequel la génération des données graphiques comprend le retrait du second onglet (2), dans lequel le retrait du second onglet (2) comprend la dissimulation du second onglet (2) sur le premier côté (11) et la représentation seulement de la seconde bande (21) dans le dispositif (1) de représentation graphique.

3. Procédé selon la revendication 1, dans lequel la largeur de l'au moins un premier ou second onglet (2) est soit inférieure ou identique à la largeur du côté du dispositif (1) de représentation graphique sur laquelle elle est affichée.

4. Procédé selon la revendication 1, dans lequel avant le retrait du premier onglet (2) et de tout onglet (2) se superposant ayant été activé à partir du premier côté (11), le procédé comprend les étapes de :
représenter une bande (21) supplémentaire au moyen du dispositif (1) de représentation graphique, dans lequel la bande (21) supplémentaire est située dans un second côté du dispositif de représentation graphique (1),
- détecter une activation de la bande (21) supplémentaire en utilisant le dispositif d'entrée (3), et
- afficher un onglet (2) supplémentaire après la bande (21) supplémentaire en réponse à ladite activation de la bande (21) supplémentaire, dans lequel l'onglet (2) supplémentaire recouvre au moins un des premier et second onglets activés (2) situés sur le premier côté (11).

5. Procédé selon la revendication 1, dans lequel après le retrait du premier onglet (2) et de tout onglet (2) se superposant ayant été activé à partir du premier côté (11), l'étape de représentation de la première bande (21) comprend :
- représenter une icône (24) dans la première bande (21), dans lequel l'icône (24) indique le nombre d'onglets (2) retirés simultanément du même côté du dispositif (1) de représentation graphique.

6. Procédé selon l'une quelconque des revendications précédentes, dans lequel l'activation comprend une action de pressage sur une bande (21) et/ou une action d'entraînement d'une bande (21) et/ou onglet (2).

7. Dispositif pour la représentation et/ou manipulation d'informations sur un dispositif (1) de représentation graphique d'une voiture, comprenant un dispositif d'entrée (3), dans lequel le dispositif d'entrée (3) est un écran tactile, le dispositif (1) de représentation graphique et un dispositif de commande (4) configuré pour faire fonctionner le procédé selon la revendication 1.

8. Dispositif selon la revendication 7, dans lequel le dispositif de commande (4) est de plus configuré pour, après affichage du second onglet (2) dans ledit dispositif (1) de représentation graphique, effectuer les étapes supplémentaires de :
- activer de façon supplémentaire la seconde bande (21) correspondant au dit second onglet (2), dans lequel l'activation supplémentaire de la seconde bande (21) correspondant au dit second onglet (2) est déterminée par le dispositif d'entrée (3),
- générer des données graphiques dans ledit dispositif (1) de représentation graphique au moyen du dispositif de commande (4) en réponse à l'activation supplémentaire de ladite seconde bande (21),
dans lequel la génération des données graphiques comprend le retrait du second onglet (2), dans lequel le retrait du second onglet (2) comprend la dissimulation du second onglet (2) sur le premier côté (11) et représenter seulement la seconde bande (21) dans le dispositif (1) de représentation graphique.
